# EUROPÄISCHE PATENTSCHRIFT

(11) **EP 1 022 086 B1**
(45) Veröffentlichungstag und Bekanntmachung des Hinweises auf die Patenterteilung: **14.11.2007**
(21) Anmeldenummer: 00100821.8
(22) Anmeldetag: 17.01.2000
(51) Int. Cl.: B23K 26/12, B23K 35/38, B23K 26/14

(54) **Laserschweissen mit Prozessgas**
Laser welding with process gas
Soudage au laser avec gaz de traitement

(30) Priorität: 19.01.1999 DE 19901898
(43) Veröffentlichungstag der Anmeldung: 26.07.2000
(73) Patentinhaber: Linde AG, 65189 Wiesbaden (DE)
(72) Erfinder: Herrmann, Johann, 85716 Unterschleissheim (DE)
(74) Vertreter: Obermüller, Bernhard

(56) Entgegenhaltungen:
- EP-A- 0 464 392
- EP-A- 0 484 533
- EP-A- 0 579 205
- DE-A- 19 730 311
- DE-C- 4 429 228
- US-A- 4 866 246
- PATENT ABSTRACTS OF JAPAN vol. 1996, no. 10, 31. Oktober 1996 (1996-10-31) & JP 08 141763 A (KAWASAKI STEEL CORP), 4. Juni 1996 (1996-06-04)
- PATENT ABSTRACTS OF JAPAN vol. 1998, no. 11, 30. September 1998 (1998-09-30) & JP 10 156573 A (CANON INC), 16. Juni 1998 (1998-06-16)
- PATENT ABSTRACTS OF JAPAN vol. 1998, no. 11, 30. September 1998 (1998-09-30) & JP 10 157142 A (CANON INC), 16. Juni 1998 (1998-06-16)
- PATENT ABSTRACTS OF JAPAN vol. 007, no. 193 (M-238), 24. August 1983 (1983-08-24) & JP 58 093592 A (MITSUBISHI JUKOGYO KK), 3. Juni 1983 (1983-06-03)

## Beschreibung

Die Erfindung betrifft die Verwendung eines Prozeßgases zum Laserschweißen mit einem auf ein zu schweißendes Werkstück fokussierten Laserstrahl. Aus der EP-A-0464392 ist es bekannt, Argon und/oder Helium oder Gemische dieser Gase mit Kohlendioxid, Sauerstoff und/oder Stickstoff einzusetzen.

Die Eigenschaften der Laserstrahlung, insbesondere die Intensität und gute Fokussierbarkeit, haben dazu geführt, daß Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden daher technische Gase eingesetzt, um diese Materialberarbeitungsprozesse effektiver, schneller und/oder mit verbesserter Qualität durchführen zu können.

Beim Laserschweißen erfüllen Prozeßgase verschiedene Aufgaben. Die Kontrolle und Reduzierung des Plasmas ist bei hohen Laserleistungen zwingend. Dies ist beispielsweise aus der Veröffentlichung "Laser im Nebel", Dr. W. Danzer und Klaus Behler, Zeitschrift LASER, Ausgabe 1/87, Seiten 32 bis 36, bekannt. Andere Aufgaben wie der Schutz vor Oxidation, eine metallurgische Optimierung und/oder eine Maximierung der Geschwindigkeit und der Qualität (Spritzer, Poren, Nahtqualität) werden bislang vernachlässigt.

Beim Laserschweißen ist es bekannt, inerte Schutzgase wie Helium oder Argon einzusetzen. Auch Stickstoff wird teilweise verwendet. Vereinzelt werden auch Beimengungen von Kohlendioxid, Sauerstoff oder Wasserstoff zu Argon oder Stickstoff gemischt.

So beinhaltet die EP 579 205 die Verwendung eines Hilfsgases zum Laserschweißen aus einem inaktiven, insbesondere aus Stickstoff und 3 bis 35 % Sauerstoff, die JP 08141763 eine Gasmischung aus 1 bis 10 % Sauerstoff in Argon oder Helium zum Laserschweißen und die JP 58093592 und die JP 07047485 eine Argon-Helium-Gasmischungen mit 1 bis 10 % Sauerstoff.

Der Erfindung lag daher die Aufgabe zugrunde, die Verwendung eines Prozeßgases und ein Verfahren der eingangs genannten Art aufzuzeigen, welche ein verbessertes Laserschweißen ermöglichen. Insbesondere sollten mit Hilfe des Prozeßgases auch neben der Kontrolle und Reduzierung des Plasmas ein Schutz vor Oxidation, eine metallurgische Optimierung und/oder eine Maximierung der Geschwindigkeit und der Qualität erreicht werden.

Diese Aufgabe wird erfindungsgemäß dadurch gelöst, daß das verwendete Prozeßgas aus 5 bis 50 Vol.-% Helium, 10 bis 30 Vol-% Sauerstoff, 5 bis 40 Vol.-%Kohlendioxid und gegebenenfalls Argon im verbleibenden Volumenrest besteht.

Wesentlich ist für die Erfindung, daß das Prozeßgas neben einem Inertgasanteil auch einen Aktivgasanteil aufweist.

Gute Ergebnisse haben sich ergeben, wenn das Prozeßgas zwischen 15 und 25 Vol.-% Sauerstoff enthält.

Es hat sich in Versuchen gezeigt, daß sogar bereits ein relativ niedriger Anteil an Helium in der Größenordnung von etwa 25 Vol.-% (z.B. ± 10 %) in der Regel für eine wirksame Plasmakontrolle ausreicht. Der genaue Prozentsatz für den Heliumanteil ist von verschiedenen Faktoren wie beispielsweise der Laserleistung, der Energiedichte, der Materialart, der Menge an verdampftem Material, der Schutzgasmenge, der Art der Gaszufuhr zum Schweißprozeß etc. abhängig. Die Anpassung der Gaszusammensetzung vor dem Hintergrund dieser Einflußfaktoren stellt für den Fachmann keinerlei Schwierigkeit dar.

Mit Vorteil kann das Prozeßgas Kohlendioxid mit einem Anteil bis zu 40 Vol.-% enthalten. In Weiterbildung der Erfindung enthält das Prozeßgas zwischen 5 und 35 Vol.-% Kohlendioxid, vorzugsweise zwischen 5 und 30 Vol.-% Kohlendioxid, besonders bevorzugt zwischen 10 und 25 Vol.-% Kohlendioxid.

Versuche an verzinkten Blechen brachten sehr gute Ergebnisse mit einem Anteil von 10 bis 25 Vol.-% Kohlendioxid (z.B. 15 Vol.-% CO₂). Der Kohlendioxidanteil führte zu wesentlich konstanteren Schweißergebnissen. Der Schweißprozeß war wesentlich sicherer und gegen Verunreinigungen des Nahtbereichs unempfindlicher. Die Geschwindigkeit konnte in einem Fall von 6 m/min auf 7 m/min gesteigert werden.

Helium dient dabei der Plasmaunterdrückung bzw. -kontrolle. Kohlendioxid unterstützt den Schmelzfluß. Argon erhöht die Abdeckung der Schweißzone. Argon erfüllt auch zumindest teilweise die Aufgabe des Heliums und trägt daher als preisgünstiger Ersatz des Inertgases Helium zur Wirtschaftlichkeit des Laserschweißens bei. Die Sauerstoffbeigabe kann am Schweißprozeß mehrere bestimmte positive Effekte hervorrufen und zur Qualitätssteigerung beitragen.

Die Erfindung kann im Zusammenhang mit allen Arten von Lasern zur Anwendung kommen. Vor allem eignet sie sich für den Einsatz bei der Laserbearbeitung mit Nd-YAG-Laser, Dioden-Laser und CO₂-Laser.

Mit dem erfindungsgemäßen Prozeßgas können insbesondere mit Vorteil niedriglegierte Stähle und verzinkte Stähle geschweißt werden.

## Patentansprüche

1. Verwendung eines Prozeßgases zum Laserschweißen mit einem auf ein zu schweißendes Werkstück fokussierten Laserstrahl, **dadurch gekennzeichnet, daß** das Prozeßgas aus 5 bis 50 Vol.-% Helium, 10 bis 30 Vol-% Sauerstoff, 5 bis 40 Vol.-%Kohlendioxid und gegebenenfalls Argon im verbleibenden Volumenrest besteht.

2. Verwendung eines Prozeßgases nach Anspruch 1, **dadurch gekennzeichnet, daß** das Prozeßgas zwischen 5 und 35 Vol.-% Kohlendioxid, vorzugsweise zwischen 5 und 30 Vol.-% Kohlendioxid enthält.

3. Verwendung eines Prozeßgases nach Anspruch 1 oder 2, **dadurch gekennzeichnet, daß** das Prozeßgas zwischen 15 und 25 Vol.-% Sauerstoff enthält.

4. Verwendung eines Prozessgases nach einem der Ansprüche 1 bis 3, **dadurch gekennzeichnet, dass** das Prozessgas als ein inertgashaltiger Prozeßgasstrom gegen die Werkstückoberfläche geleitet wird.

## Claims

1. Use of a process gas for laser welding with a laser beam focused onto a workpiece that is to be welded, **characterized in that** the process gas consists of 5 to 50% by volume helium, 10 to 30% by volume oxygen, 5 to 40% by volume carbon dioxide and optionally argon forming the remainder of the volume.

2. Use of a process gas according to Claim 1, **characterized in that** the process gas contains between 5 and 35% by volume carbon dioxide, preferably between 5 and 30% by volume carbon dioxide.

3. Use of a process gas according to Claim 1 or 2, **characterized in that** the process gas contains between 15 and 25% by volume oxygen.

4. Use of a process gas according to one of Claims 1 to 3, **characterized in that** the process gas is passed onto the workpiece surface as a process gas stream with an inert gas content.

## Revendications

1. Utilisation d'un gaz de traitement pour le soudage au laser avec un faisceau laser focalisé sur une pièce à souder, **caractérisée en ce que** le gaz de traitement se compose de 5 à 50 % en volume d'hélium, de 10 à 30 % en volume d'oxygène, de 5 à 40 % en volume de dioxyde de carbone et éventuellement d'argon pour le pourcentage en volume restant.

2. Utilisation d'un gaz de traitement selon la revendication 1, **caractérisée en ce que** le gaz de traitement contient entre 5 et 35 % en volume de dioxyde de carbone, de préférence entre 5 et 30 % en volume de dioxyde de carbone.

3. Utilisation d'un gaz de traitement selon la revendication 1 ou 2, **caractérisée en ce que** le gaz de traitement contient entre 15 et 25 % en volume d'oxygène.

4. Utilisation d'un gaz de traitement selon l'une quelconque des revendications 1 à 3, **caractérisée en ce que** le gaz de traitement est conduit sous la forme d'un courant de gaz de traitement contenant un gaz inerte contre la surface de la pièce.
